(19) Europäisches Patentamt

European Patent Office

Office européen des brevets

(11) **EP 0 979 762 A2**

(12) **EUROPÄISCHE PATENTANMELDUNG**

(43) Veröffentlichungstag:
**16.02.2000 Patentblatt 2000/07**

(51) Int. Cl.⁷: $B60T\ 8/00$, $B60K\ 41/20$

(21) Anmeldenummer: **99110329.2**

(22) Anmeldetag: **28.05.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **08.08.1998 DE 19835937**

(71) Anmelder: **WABCO GmbH**
**30453 Hannover (DE)**

(72) Erfinder:
• **Claussen, Heiko**
  **30455 Hannover (DE)**
• **Eickhoff, Jürgen**
  **29664 Walsrode (DE)**

(74) Vertreter: **Schrödter, Manfred**
**WABCO GmbH,**
**Am Lindener Hafen 21**
**30453 Hannover (DE)**

(54) **Verfahren zur Regelung der Abstiegsgeschwindigkeit eines Gelände-Fahrzeugs**

(57) Es wird ein Verfahren zur Regelung der Geschwindigkeit eines Gelände-Fahrzeugs im Gefälle vorgeschlagen. Dabei ist die Fahrzeuggeschwindigkeit ($V_{Fahr}$) mittels einer Elektronik (9) durch einen aktiven Bremseneingriff, d. h., ohne daß der Fahrer die Bremse betätigen muß, auf eine konstante Abstiegsgeschwindigkeit ($V_{Soll}$) einregelbar.

Das Fahrzeug weist mehrere Vorwärtsgänge und einen Rückwärtsgang innerhalb einer Low-Range-Fahrstufe auf. Die konstante Abstiegsgeschwindigkeit ($V_{Soll}$) ist von der Stellung des Gaspedals und von dem gerade eingelegten Gang (i) der Low-Range-Fahrstufe abhängig.

Das beschriebene Verfahren ist besonders vorteilhaft anwendbar bei Geländefahrzeugen, bei denen die Bremswirkung des Motors in steilen Gefällen nicht mehr allein zur Verlangsamung des Fahrzeugs ausreicht.

Ftg.4

EP 0 979 762 A2

**Beschreibung**

Die Erfindung bezieht sich auf ein Verfahren zur Regelung der Abstiegsgeschwindigkeit eines Gelände-Fahrzeugs gemäß dem Oberbegriff des Patentanspruchs 1.

Es sind bereits Straßenfahrzeuge bekannt, bei denen Einrichtungen vorgesehen sind, durch welche das Fahrzeug auf einer Gefällestrecke durch ein automatisches Anlegen der Bremsen ("aktives bremsen") auf einer konstanten, vom Fahrer gewünschten Geschwindigkeit gehalten werden kann. Derartige Fahrzeuge sind in der Regel mit einem Antiblockiersystem (ABS) sowie mit einer Anfahrschlupfregelung (ASR) ausgerüstet. Die dadurch bereits vorhandenen Baugruppen wie Elektronik, Raddrehzahlsensoren, Magnetregelventile usw. werden mitbenutzt, um die o. g. Geschwindigkeitsregelung durchzuführen. Durch die bekannte Einrichtung wird der Fahrer auf Gefällestrekken davon entlastet, ständig das Bremspedal betätigen zu müssen. Weiterhin wird, auch bei unterschiedlichen Steigungen, dabei eine gleichmäßige Geschwindigkeit eingehalten.

Aus der DE-A-24 19 242 ist ein elektropneumatischer Bremskraftregelkreis bekannt, mit dessen Hilfe die jeweilige Fahrzeuggeschwindigkeit durch aktives bremsen auf einer Gefällestrecke beibehalten werden kann, sobald weder das Gas- noch das Bremspedal betätigt wird. Die Geschwindigkeitsregelung wird sofort abgeschaltet, sobald eines der genannten Pedale betätigt wird, oder das übergeordnete Antiblockiersystem in Aktion tritt.

Weiter ist aus der WO 96/11826 A1 bekannt, ein Fahrzeug mit einer sogenannten Hügel-Abfahrts-Regelung auszustatten (auch bezeichnet als HDC = Hill Descent Control). Diese Regelungsart kann vom Fahrer durch einen Schalter eingeschaltet werden. Die o. g. Regelung ist ebenfalls in der Lage, durch eine aktive, geregelte Bremsung das Fahrzeug auf einer steilen Gefällestrecke auf einer konstanten, niedrigen Geschwindigkeit zu halten, ohne daß der Fahrer die Bremsen zu betätigen braucht. Dieses System ist besonders für Geländefahrzeuge vorgesehen, die auf einem Gefälle fahren, das so steil ist, daß die Motorbremswirkung auch im niedrigsten Gang nicht mehr ausreicht, um das Fahrzeug zu verzögern.

Schließlich ist aus der DE 196 48 559 ein Verfahren zur Geschwindigkeitsregelung für ein Fahrzeug im Gefälle bekannt, wobei die Fahrzeuggeschwindigkeit mittels einer Elektronik durch einen aktiven Bremseneingriff auf eine konstante Abstiegsgeschwindigkeit einregelbar ist. Zur Erzielung eines komfortablen Überganges zwischen der Fahrzeuggeschwindigkeit und der konstanten Abstiegsgeschwindigkeit wird hier innerhalb der Elektronik eine kontinuierlich veränderbare Soll-Geschwindigkeit gebildet, auf welche die aktuelle Fahrzeuggeschwindigkeit eingeregelt wird, und die mit einem kontinuierlichem Übergang in die konstante Abstiegsgeschwindigkeit einmündet.

Der Erfindung liegt die Aufgabe zugrunde, ein Verfahren der eingangs genannten Art anzugeben, mit dem die aktive, geregelte Bremsung für ein Geländefahrzeug mit mehreren Gängen einer Low-Range-Fahrstufe besonders komfortabel ausfällt.

Diese Aufgabe wird durch die im Patentanspruch 1 enthaltene Erfindung gelöst. Die Unteransprüche enthalten zweckmäßige Weiterbildungen.

Die Erfindung wird im folgenden anhand einer Zeichnung näher erläutert.

Diese zeigt in

Fig. 1     ein Geländefahrzeug, das sich auf einer Gefällefahrt befindet,

Fig. 2     eine schematische Darstellung der pneumatischen sowie elektronischen Bremsanlage dieses Fahrzeugs,

Fig. 3     ein Diagramm eines HDC-Regelvorganges,

Fig. 4     ein Diagramm der Fahrzeug-Abstiegsgeschwindigkeit über der Drosselklappenstellung.

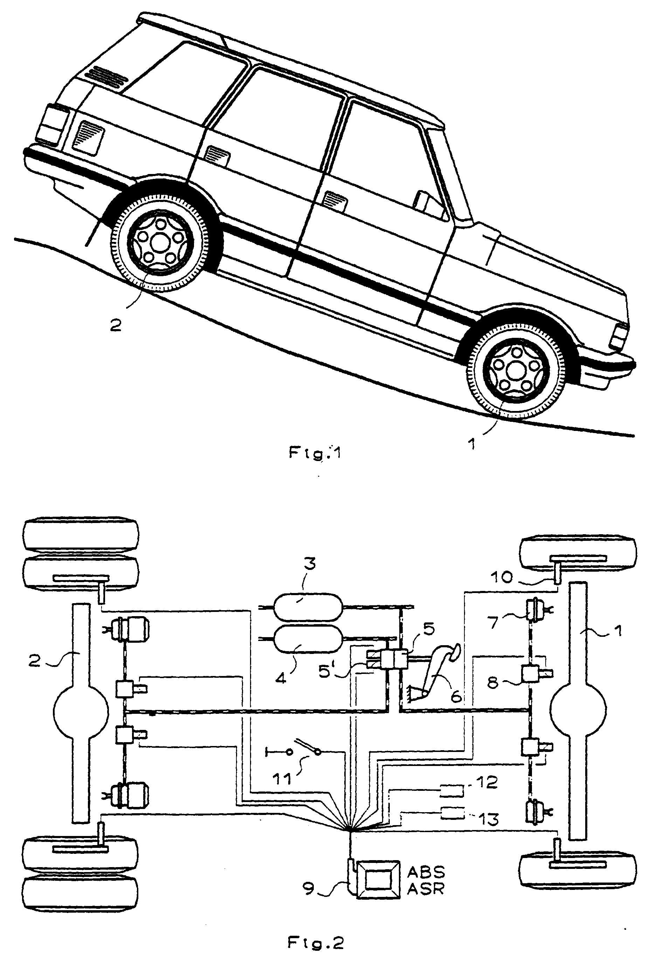

Das sich auf der Gefällefahrt befindliche Fahrzeug in der Fig. 1 besitzt infolge seiner Schräglage eine tieferliegende Achse (1) und eine höherliegende Achse (2). Die Gefällefahrt kann sowohl vorwärts wie dargestellt, als auch rückwärts erfolgen.

In der Fig. 2 ist der elektronische sowie pneumatische Schaltplan des Fahrzeugs nach der Fig. 1 schematisch dargestellt. Anstatt einer pneumatischen Bremsanlage wie gezeichnet, kann auch eine hydraulische oder eine gemischte Bremsanlage vorgesehen sein.

Das Fahrzeug besitzt zwei Achsen (1) und (2). Die Druckmittelversorgung für die Bremsanlage erfolgt über zwei Vorratsbehälter (3, 4) jeweils getrennt für eine Achse. Über ein Bremsventil (5), das mit einem Bremspedal (6) betätigt wird, wird das Druckmittel zu den Radbremszylindern (7) weitergeleitet. Den Bremszylindern (7) vorgeschaltet sind ABS/ASR-Magnetregelventile (8). Das Bremsventil (5) ist zusätzlich als ASR-Magnetventil (5') ausgebildet, da während einer ASR-Regelung Bremsdruck auf einzelne Räder durchgelassen werden muß, ohne daß dabei das Bremspedal (6) betätigt ist.

Zur Steuerung der genannten Magnetventile ist eine ABS/ASR-Elektronik (9) vorgesehen. Hierzu ist diese über elektrische Anschlußleitungen mit den oben genannten Ventilen verbunden. Über Radsensoren (10) erhält die Elektronik (9) Informationen über das Radverhalten jedes einzelnen Rades. Weiter sind ein Drosselklappen-Sensor (12) und ein Getriebe-Sensor (13) mit der Elektronik (9) verbunden. Ein Aktivierungsschalter (11) dient zum Einschalten der aktiven Bremsung (HDC-Funktion). In der Fig. 2 sind pneumatische bzw.

hydraulische Leitungen schwarz/weiß dargestellt, während elektrische Leitungen als dünne durchgehende Linien dargestellt sind.

Im folgenden wird die Funktionsweise der Anlage während einer geregelten Bergabfahrt näher erläutert. Die Funktion "geregelte Bergabfahrt" wird dabei entweder automatisch von der Elektronik (9), oder durch den Schalter (11) vom Fahrer eingeschaltet. Der Fahrer nimmt nun den Fuß vom Bremspedal oder vom Gashebel. Sobald die Abfahrtsregelung in Funktion tritt, wird das ASR-Magnet-ventil (5') erregt, und damit direkt Bremsdruck auf die Bremszylinder (7) der Räder der Vorderachse (1) geleitet (aktive Bremsung). Die Elektronik (9) regelt dabei die Geschwindigkeit des Fahrzeugs durch eine entsprechende Ansteuerung der Magnetregelventile (8) derart, daß eine vorgegebene Geschwindigkeit unabhängig von Änderungen des Gefälles eingeregelt und beibehalten wird.

Eine aktiv gebremste Bergabfahrt erfolgt natürlich nur, wenn die Bremswirkung des Motors allein nicht ausreichend groß ist, um das Fahrzeug zu verzögern.

Falls während einer geregelten Bergabfahrt ein Rad blockieren sollte, wird die beschriebene Funktion sofort von der normalen ABS-Funktion abgelöst. Ebenfalls ist eine Ablösung des Betriebes mit der geregelten Abstiegsgeschwindigkeit dann vorzusehen, wenn der Fahrer durch Betätigung des Bremspedals oder des Gaspedals den Wunsch hat, die vorher geregelte konstante Geschwindigkeit zu verlangsamen oder zu erhöhen.

Um eine Überhitzung der Bremsen während einer längeren geregelten Bergabfahrt zu vermeiden, ist weiter zweckmäßig vorzusehen, deren Temperatur zu überwachen, und bei Übersteigen eines Grenzwertes den Fahrer durch eine Warneinrichtung aufmerksam zu machen. Dieser hat dann Gelegenheit, das Fahrzeug anzuhalten, bis die Bremsen wieder abgekühlt sind. Eine derartige Bremstemperaturüberwachung kann entweder durch (nicht dargestellte) Temperatursensoren an den Radbremsen erfolgen, oder es kann die Bremsentemperatur durch ein elektronisches Modell innerhalb der Elektronik (9) nachgebildet werden. Die zweite Möglichkeit ist zwar ungenauer, aber kostengünstiger.

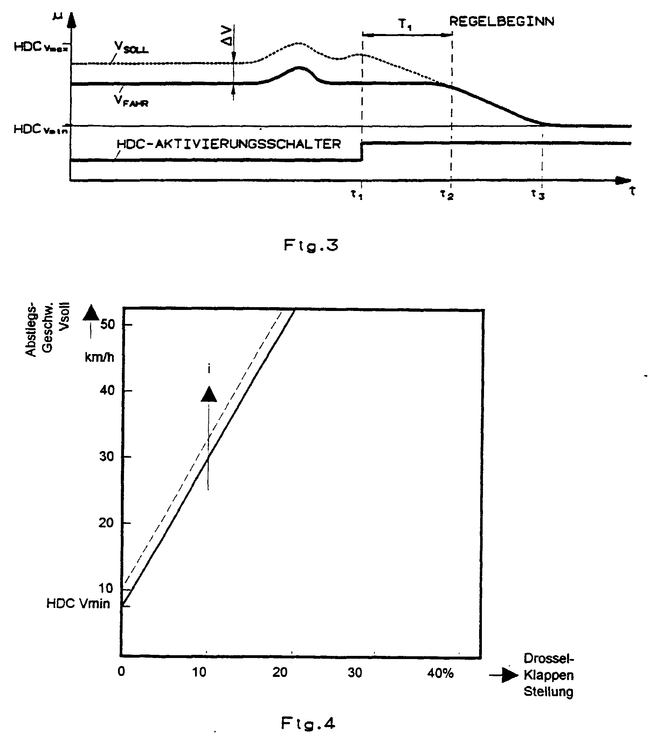

Eine genauere Darstellung des Überganges der Fahrzeuggeschwindigkeit ($V_{Fahr}$) in die geregelte, konstante Abstiegsgeschwindigkeit im Gefälle (HDC $V_{min}$) ist im Diagramm der Fig. 3 dargestellt.

Das Fahrzeug fährt zunächst mit einer aktuellen Fahrzeuggeschwindigkeit $V_{Fahr}$ (durchgehende Linie). Innerhalb der Elektronik (9) wird gleichzeitig eine Sollgeschwindigkeit ($V_{soll}$) (gepunktete Linie) gebildet, die anfangs um einen Betrag $\Delta V$ über der Fahrzeuggeschwindigkeit liegt. Ein typischer Wert für $\Delta V$ ist dabei 5 bis 7 km/h. $\Delta V$ kann auch geschwindigkeitsabhängig gebildet sein, wobei der Wert mit der Fahrzeuggeschwindigkeit ansteigt. Die Fahrzeuggeschwindigkeit $V_{Fahr}$ liegt in der Fig. 3 unter einem Wert HDC $V_{max}$,

welcher die maximal zulässige HDC-Geschwindigkeit ist. Diese beträgt etwa 50 km/h. Oberhalb dieser Geschwindigkeit ist eine Regelung nicht vorgesehen.

Zum Zeitpunkt $t_1$ möge der Fahrer den Aktivierungsschalter (11) betätigen und so die HDC-Funktion einschalten. Der Fahrer nimmt dann den Fuß vom Gaspedal oder Bremse. Daraufhin wird die Sollgeschwindigkeit $V_{soll}$ durch die Elektronik (9) mittels aktiver Bremsung langsam abgesenkt, um einen sanften Übergang auf den Wert HDC $V_{min}$ hin zu erzielen. Im Zeitpunkt $t_2$ schneidet die Kurve der Sollgeschwindigkeit die Kurve der Fahrzeuggeschwindigkeit. Ab diesem Zeitpunkt beginnt die aktive Bremsung des Fahrzeugs. Die Fahrzeuggeschwindigkeit $V_{Fahr}$ wird dabei auf die Sollgeschwindigkeit $V_{soll}$ eingeregelt, so daß jetzt beide Kurven deckungsgleich sind. Im Zeitpunkt $t_3$ ist die Endgeschwindigkeit HDC $V_{min}$ erreicht. Auf dieser konstanten Abstiegsgeschwindigkeit wird das Fahrzeug nun automatisch solange gehalten, bis der Aktivierungsschalter (11) wieder ausgeschaltet wird. Die Zeit $T_1$ zwischen der Betätigung des Aktivierungsschalters (11) im Zeitpunkt $t_1$ und dem Schnittpunkt von Sollgeschwindigkeit und Fahrzeuggeschwindigkeit (Regelbeginn, Zeitpunkt $t_2$) ist abhängig vom vorherigen Fahrzeugverhalten (beschleunigt oder verzögert), der Steigung von $V_{soll}$, und dem Betrag von $\Delta V$. Die Zeit $T_1$ beträgt typischerweise etwa 0,5 s.

Will der Fahrer während des oben beschriebenen geregelten Abstiegsbetriebes die Fahrgeschwindigkeit erhöhen, so betätigt er geringfügig das Gaspedal. Die Stellung des Gaspedals bzw. der Drosselklappe wird durch einen Gassensor (12) abgefühlt und der Elektronik (9) mitgeteilt.

Wie in der Fig. 4 dargestellt ist, erhöht die Elektronik (9) daraufhin in etwa linearer Abhängigkeit von der Drosselklappenstellung die konstante Abstiegsgeschwindigkeit des Fahrzeugs von der Minimalgeschwindigkeit (HDC $V_{min}$) auf eine drosselklappenstellungsabhängige Geschwindigkeit. Wie aus der Fig. 4 hervorgeht, ist bei einer Drosselklappenstellung von beispielsweise 10 % die neue Abstiegsgeschwindigkeit dann etwa 30 km/h.

Der in Fig. 4 eingetragene Wert für die Minimalgeschwindigkeit (HDC $V_{min}$), also die Abstiegsgeschwindigkeit ohne Betätigung des Gaspedals sowie die eingezeichnete Kurve für die Abstiegsgeschwindigkeit mit Betätigung des Gaspedals sind abhängig von dem gerade eingelegten Gang (i). Bei einem höheren eingelegten Gang (i) der Low-Range-Fahrstufe verschiebt sich die Kurve parallel nach oben (gestrichelt eingezeichnet). Der Elektronik (9) wird deshalb weiter eine Information über den gerade eingelegten Gang (i) zugeführt. Dieser Gang kann durch einen Getriebesensor (13) abgefühlt werden.

Alternativ kann der eingelegte Gang (i) aber auch vorteilhaft aus den Raddrehzahlen (VR) und der Motordrehzahl (VM) berechnet werden nach der Formel

$$i = \frac{k \times VM}{(Summe\ VR)\ /n}$$

Mit

k = fester Faktor zur Berücksichtigung der Übersetzung des Raddifferentials und

n = Zahl der Räder.

Durch diese Berechnung kann ein besonderer Gangsensor (13) eingespart werden. Sensoren für die Raddrehzahl VR und die Motordrehzahl VM sind normalerweise schon im Fahrzeug vorhanden.

In Fahrversuchen hat sich herausgestellt, daß die folgenden Werte für die minimale Abstiegsgeschwindigkeit (HDC $V_{min}$), also die Geschwindigkeit, die ohne Betätigung des Gaspedals eingeregelt wird, am günstigsten sind. Die Werte betragen für ein durchschnittliches Geländefahrzeug mit manuell geschaltetem Getriebe im ersten Gang der Low-Range-Fahrstufe etwa 7 Km/h, im zweiten Gang etwa 8 Km/h, im dritten Gang etwa 10 Km/h, im vierten Gang etwa 12 Km/h, im fünften Gang etwa 14 Km/h, und im Rückwärtsgang etwa 6 Km/h.

Die in der Fig. 4 eingezeichnete Kurve verschiebt sich dabei parallel nach oben.

Bei Automatik-Getrieben ist wegen des Schlupfes im Wandler mit Hilfe der obengenannten Formel nur eine Unterscheidung zwischen den Fahrstufen 1 und 2 oder 3 und D möglich. Die entsprechenden Werte für die minimale Abstiegsgeschwindigkeit (HDC $V_{min}$) sind hier etwa 12 Km/h für die Vorwärtsstufen und 6 Km/h für die Rückwärtsstufe.

Vorteilhaft ist weiter, daß eine Leerlauferkennung und/oder eine Erkennung einer getretenen Kupplung vorgesehen ist. In diesen beiden Fällen steht nämlich die Bremswirkung des Motors während der aktiven Bremsphase im Gefälle nicht mehr zur Verfügung. Dies bedeutet, daß die Bremsen schneller überlastet bzw. erhitzt werden. Für diesen (unerwünschten) Betriebszustand ist eine Warnung für den Fahrer mittels einer Warnleuchte oder einem akkustischen Signalgeber vorgesehen (nicht dargestellt).

Die Stellung "Getriebe in Neutral bzw. Leerlauf" sowie die Stellung des Kupplungspedals könnten natürlich über besondere Sensoren (nicht dargestellt) festgestellt werden.

Besonders vorteilhaft ist es aber, die beiden genannten Stellungen ebenfalls über eine Auswertung der o. g. Formel

$$i = \frac{k \times VM}{(Summe\ VR)\ /\ n}$$

zu erkennen. Hierdurch können aufwendige Sensoren eingespart werden. Da bei den beiden genannnten Fällen eine eindeutige Zuordnung von Motordrehzahl und Raddrehzahl nicht vorliegt, der errechnete Wert für den Gang (i) also keine feste Zahl ergibt, kann hierdurch innerhalb der Auswerte-Elektronik (9) auf das Vorliegen der beiden unerwünschten Bedingungen Leerlauf bzw. getretene Kupplung geschlossen werden.

**Patentansprüche**

1. Verfahren zur Regelung der Abstiegsgeschwindigkeit eines Geländefahrzeugs, welches ein steiles Gefälle herabfährt, wobei die Fahrzeuggeschwindigkeit ($V_{Fahr}$) mittels einer Elektronik (9) und einer Bremsanlage mit aktivem Bremseneingriff auf eine konstante Abstiegsgeschwindigkeit ($V_{Soll}$) einregelbar ist, und wobei das Fahrzeug mehrere Vorwärtsgänge und einem Rückwärtsgang innerhalb einer Low-Range-Fahrstufe aufweist, <u>dadurch gekennzeichnet,</u> daß die Abstiegsgeschwindigkeit ($V_{Soll}$) von der Stellung der Drosselklappe und von dem gerade eingelegten Gang (i) der Low-Range-Fahrstufe abhängig ist.

2. Verfahren nach Anspruch 1, <u>dadurch gekennzeichnet,</u> daß die Stellung der Drosselklappe von einem Gas-sensor (12) erkannt wird.

3. Verfahren nach Anspruch 1, <u>dadurch gekennzeichnet,</u> daß der eingelegte Gang (i) durch einen Getriebe-sensor (13) erkannt wird.

4. Verfahren nach Anspruch 1, <u>dadurch gekennzeichnet,</u> daß der eingelegte Gang (i) mittels der Elektronik (9) aus den Raddrehzahlen (VR) und der Motordrehzahl (VM) berechnet wird nach der Formel

$$i = \frac{k \times VM}{(Summe\ VR)\ /\ n}$$

mit

k = fester Faktor zur Berücksichtigung der Übersetzung des Raddifferentials und

n = Zahl der Räder.

5. Verfahren nach Anspruch 1, <u>dadurch gekennzeichnet,</u> daß die Abstiegsgeschwindigkeit ($V_{Soll}$) vom eingelegten Gang (i) abhängig ist.

6. Verfahren nach Anspruch 1, <u>dadurch gekennzeichnet,</u> daß die Abstiegsgeschwindigkeit ($V_{Soll}$) im Rückwärtsgang am kleinsten ist.

7. Verfahren nach einem oder mehreren der Ansprü-

che 1 bis 6, <u>dadurch gekennzeichnet,</u> daß eine Leerlauferkennung und/oder eine Erkennung einer getretenen Kupplung vorgesehen ist.

**8.** Verfahren nach Anspruch 7, <u>dadurch gekenn-zeichnet,</u> daß Leerlauf oder getretene Kupplung durch Auswertung der Formel

$$i = \frac{k \times VM}{(\text{Summe } VR) / n}$$

erkannt werden.

**9.** Verfahren nach einem oder mehreren der Ansprüche 1 bis 8, <u>dadurch gekennzeichnet,</u> daß eine akkustische oder optische Warneinrichtung für den Fall des Leerlaufs oder der getretenen Kupplung vorgesehen ist.

Fig.1

Fig.2

Fig.3

Fig.4